# EUROPEAN PATENT APPLICATION

(11) **EP 4 755 679 A1**
(43) Date of publication of application: **10.06.2026**
(21) Application number: 24217682.4
(22) Date of filing: 05.12.2024
(51) Int. Cl.: B60J 7/02, B60J 7/043

(54) **ROOF SYSTEM FOR A VEHICLE AND VEHICLE PROVIDED THEREWITH**

(71) Applicant: Inalfa Roof Systems Group B.V., 5807 GW Oostrum (NL)
(72) Inventor: VAN BOXTEL, Eduardus Christianus Henricus, 5807 GW Oostrum (NL)
(74) Representative: De Vries & Metman

(57) **Abstract**

A roof system is provided for a vehicle having a roof opening (3) in a fixed roof (1, 2) of the vehicle, at least comprising a panel (4) which is movable relative to the fixed roof between a closed position, a tilted position in which a rear end of the panel is lifted and a fully opened position, and a rear lever (11) for lifting a rear end of the panel (4), wherein the panel (4) at its rear end is provided with a bracket (13) comprising a guide curve in which the rear lever movably engages, such that the rear lever is movable between a position engaging a first guide curve section (14) in which the panel assumes a first tilted position in which its rear end is lifted to a first height, and a position engaging a second guide curve (15) section in which the panel assumes a second tilted position in which its rear end is lifted to an increased second height.

## Description

The invention in a first aspect relates to a roof system for a vehicle in accordance with the preamble of claim 1.

In a known roof system of such a type the roof panel is capable of assuming a specific tilted position.

It is the object of the present invention to provide an improved roof system.

Thus, in accordance with the present invention the roof panel is characterized in that the panel at its rear end is provided with a bracket comprising a guide curve in which the rear lever movably engages, such that the rear lever is movable between a position engaging a first guide curve section in which the panel assumes a first tilted position in which its rear end is lifted to a first height, and a position engaging a second guide curve section in which the panel assumes a second tilted position in which its rear end is lifted to an increased second height.

As a result the panel can assume two different tilted positions.

Specifically, the roof system may comprise:
(a) two guide rails extending in a longitudinal direction of said vehicle at opposite lateral sides of the roof opening;
(b) the panel which is movable relative to fixed roof between a closed position in which the roof opening is closed, a tilted position in which a rear end of the panel is lifted and a fully opened position in which also the forward end of the panel is lifted and the panel is shifted to the rear over the fixed roof;
(c1) a front mechanism cooperating with the guide rails, comprising a front lever pivotably engaging a forward part of the panel with a front pivot having a fixed position relative to the panel, and configured for lifting the forward part of the panel and shifting the panel in a rearward longitudinal direction;
(c2) a front locking mechanism cooperating with the guide rails and the front lever and configured for, in a locking position, preventing a movement of the front lever and panel in said rearward longitudinal direction and for, in a release position, allowing said movement of the front lever and panel in said rearward longitudinal direction;
(d1) a rear mechanism cooperating with the guide rails, comprising the rear lever pivotably engaging a rearward part of the panel with a rear pivot and configured for moving the panel to the tilted position;
(d2) a rear locking mechanism cooperating with the guide rails and the rear lever configured for, in a locking position, preventing a movement of the rear lever in said rearward longitudinal direction and for, in a release position, allowing said movement of the rear lever in said rearward longitudinal direction;
(e) at least one operating part which is movable in one of the guide rails and which is responsible for in a specific timed manner causing the operation of the front lever, front locking mechanism, rear lever and rear locking mechanism such that the panel, starting from its closed position, first moves to the tilted position, next to a position with also its forward end lifted and finally to its fully opened position;
wherein the panel at its rear end is provided with the bracket comprising a guide curve in which the rear pivot is movable relative to the panel, which guide curve comprises a forward guide curve section at a first distance from the panel and a rearward guide curve section at a larger second distance from the panel, wherein the operating part by moving in the longitudinal direction causes the movement of the panel to its tilted position in such a manner that successively:
   - in the closed position of the panel the rear pivot is located in the forward guide curve section;
   - starting from the closed position, the rear lever remains locked against a longitudinal movement, and is lifted while the rear pivot remains in the forward guide curve section, whereas the panel remains locked against a longitudinal movement, such that the panel assumes a first tilted position in which its rear end is lifted to a first height;
   - starting from the first tilted position, the rear locking mechanism unlocks the rear lever and the rear lever is moved longitudinally such that the rear pivot moves towards the rearward guide curve section, while the panel still remains locked against a longitudinal movement, such that the panel assumes a second tilted position in which its rear end is lifted to an increased second height.

The roof system in accordance with this embodiment of the invention thus, as a result of a cooperation between the rear pivot of the rear lever and the guide curve of the bracket, very effectively allows the panel to be positioned in said two different tilted positions before being moved to the fully opened position.

In one embodiment, the guide curve in the bracket substantially extends in a linear and inclined manner from the forward guide curve section towards the rearward guide curve section. Thus, in such an embodiment the first tilted position of the panel will gradually merge into the second tilted position when the rear pivot moves from the forward guide curve section towards the second guide curve section.

In an alternative embodiment, the forward and rearward guide curve sections both extend in a linear manner over some distance and are connected by an intermediate guide curve section extending in an inclined manner. Such an embodiment, among others, may be beneficial for, in an optimized manner, defining (and maintaining) the first and second tilted positions of the panel.

In one embodiment of the roof system the rear locking mechanism comprises a locking pin attached to the rear lever and a stationary rear locking curve cooperating therewith. It is conceivable that such a locking mechanism will be part of the rear mechanism.

In a specific embodiment the guide curve in the bracket is embodied such that the rear pivot is remote from a rearward boundary of the rearward guide curve section in a situation in which the front locking mechanism has unlocked the front lever and the panel, the rear locking mechanism has unlocked the rear lever and the operating part longitudinally moves the front lever, panel and rear lever.

By keeping the rear pivot remote from such a rearward boundary it can be avoided that the rear pivot already engages such a rearward boundary before the panel starts to move rearwardly, thus avoiding detrimental stresses in and deformations of the roof system which could negatively affect its operation.

In further embodiments of the roof system the operating part may be provided with at least one guide channel, wherein the front lever and rear lever are provided with guide pins cooperating with the at least one guide channel, and/or the operating part may comprises a front operating part cooperating with the front lever and a rear operating part cooperating with the rear lever, wherein the front operating part and rear operating part are coupled for synchronizing the longitudinal movements thereof. In the latter case the coupling between the front operating part and rear operating part may comprise a mechanical connection therebetween.

In one embodiment the front locking mechanism comprises a locking pin attached to the front lever and a stationary front locking curve cooperating therewith. It is conceivable that such a locking mechanism will be part of the front mechanism.

In a second aspect the invention relates to a vehicle provided with a roof system in accordance with the invention.

Hereinafter the invention will be elucidated while referring to the drawings, in which:
Figures 1-8 schematically and in a side elevational view illustrate an embodiment of a roof system in accordance with the present invention in successive positions while moving from a closed position towards a fully opened position;
Figure 9 schematically and on a larger scale shows a guide curve as used in the embodiment according to figures 1-8, and
Figure 10 in a similar manner shows an alternative embodiment of the guide curve.

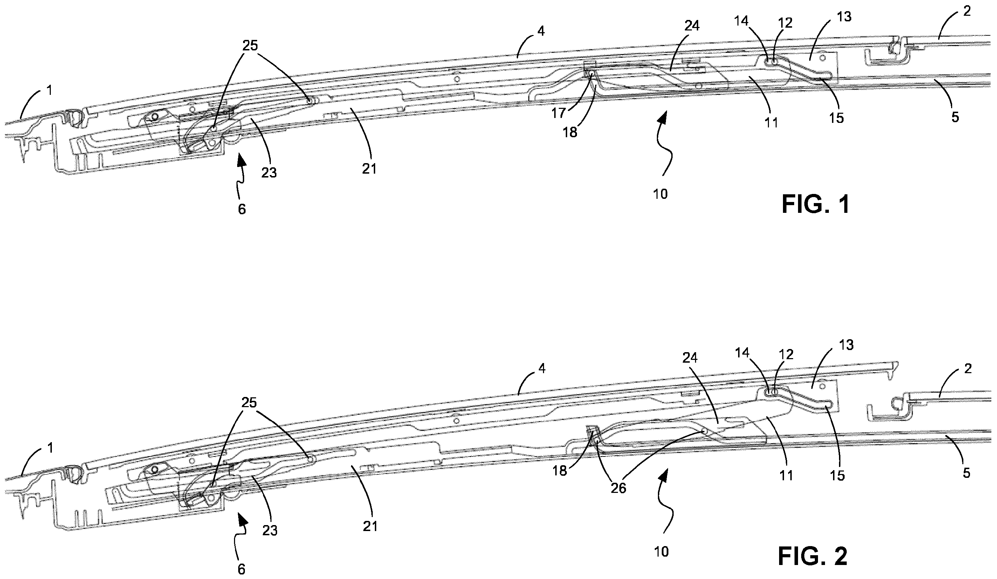

The general lay-out of the roof system in accordance with the present invention will be explained while referring to selected ones of the figures 1-8. In these figures a rearward longitudinal direction extends from left to right (and thus, a longitudinal direction is either from left to right or from right to left).

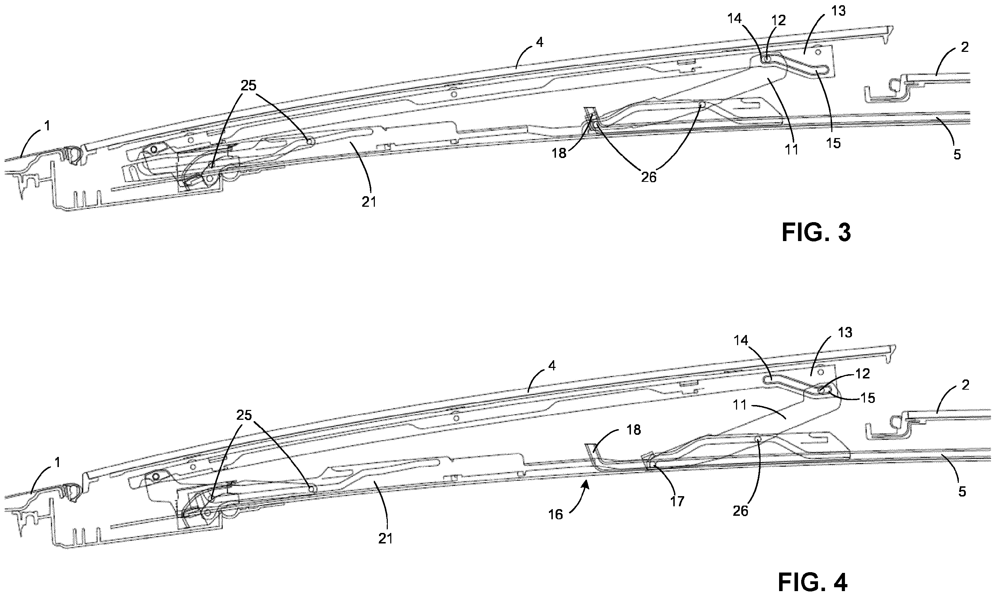

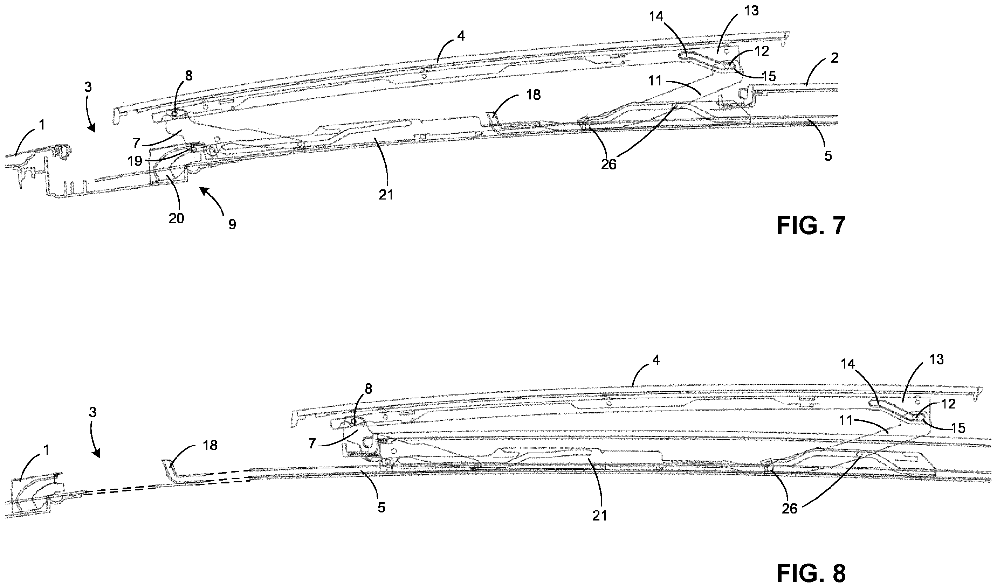

Figure 1 shows part of a vehicle, in particular front and rear parts 1,2 respectively of its fixed roof. Between said front and rear parts a roof opening 3 (best visible in figure 8) is defined. The roof system further comprises a panel 4 which, as will be discussed in more detail below, is movable relative to the fixed roof (parts 1 and 2) between a closed position (figure 1) in which the roof opening 3 is closed, a tilted position (figures 3 and 4) in which a rear end of the panel 4 is lifted and a fully opened position (figure 8) in which also the forward end of the panel 4 is lifted and the panel is shifted to the rear over the rear part 2 of the fixed roof 1 (and of course an opposite movement back to the initial, fully closed position).

For enabling such a movement of the panel 4 the roof system at least comprises the components discussed below. It is noted that the roof system generally will comprise two similar (but mirror-shaped) assemblies positioned at opposite lateral sides of the roof opening, each provided with said components.

A guide rail 5 extends in the longitudinal direction of the vehicle at a lateral side (and at a level below the level) of the roof opening 3. A front mechanism 6 is provided that cooperates with the guide rail 5, and this front mechanism comprises a front lever 7 (see for example figure 7) that pivotably engages a forward part of the panel 4 (directly, or indirectly through a bracket attached to the panel) with a front pivot 8 having a fixed position relative to the panel 4.

As will appear below, said front mechanism 6 with front lever 7 is configured for lifting the forward part of the panel 4 and for shifting the panel in the rearward longitudinal direction.

Also part of the front mechanism 6 is a front locking mechanism 9 cooperating with the guide rails 5 and the front lever 7 and intended for preventing or allowing a movement of the front lever 7 and panel 4 in said rearward longitudinal direction, as will be discussed in greater detail below.

Further a rear mechanism 10 is provided that cooperates with the guide rail 5, and this rear mechanism comprises a rear lever 11 (see for example figure 2) pivotably engaging a rearward part of the panel 4 with a rear pivot 12.

The panel 4 at its rear end is provided with a bracket 13 (which may or may not be the same bracket to which the front pivot 8 may be connected) comprising a guide curve in which the rear pivot 12 is movable relative to the panel 4. Said guide curve comprises a forward guide curve section 14 at a first distance from the panel 4 and a rearward guide curve section 15 at a larger second distance from the panel.

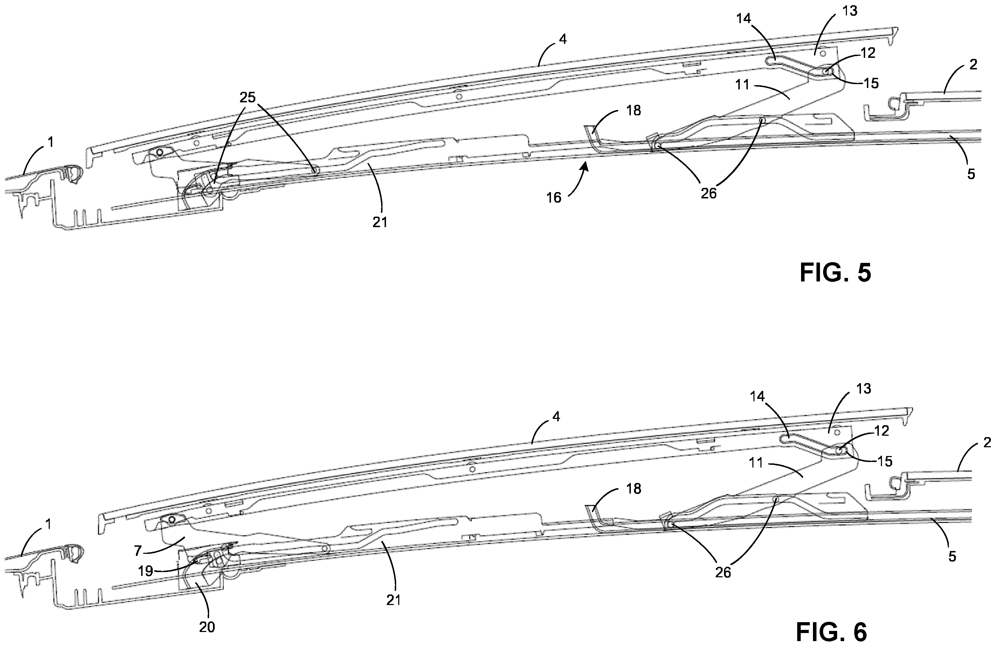

As a further member the rear mechanism 10 comprises a rear locking mechanism 16 (see, for example, figure 4) cooperating with the guide rail 5 and the rear lever 11 for preventing or allowing a movement of the rear lever in the rearward longitudinal direction. In the illustrated embodiment, said rear locking mechanism 16 comprises a locking pin 17 attached to the rear lever 11 and a stationary rear locking curve 18 cooperating therewith. In a similar manner the front locking mechanism 9 comprises a locking pin 19 attached to the front lever 7 and a stationary front locking curve 20 cooperating therewith (best seen in figure 6).

The roof system further is provided with an operating part which is movable in the guide rail 5 and which is responsible for in a specific timed manner causing the operation of the front lever 7, front locking mechanism 9, rear lever 11 and rear locking mechanism 16, such that the panel 4, starting from its closed position, first moves to the tilted position, next to a position with also its forward end lifted and finally to its fully opened position.

In the illustrated embodiment said operating part comprises a front operating part 21 configured to cooperate with the front lever 7 and front locking mechanism 9, as well as a rear operating part 22 configured to cooperate with the rear lever 11 and rear locking mechanism 16. The front operating part 21 and rear operating part 22 are coupled (for example mechanically, as illustrated) for synchronizing their longitudinal movements.

The front and rear operating parts 21,22 each are provided with at least one respective guide channel 23,24, whereas the front lever 7 and rear lever 11 are provided with respective guide pins 25,26 cooperating with the at least one guide channel in a manner well known in the art for defining the movement of the levers.

It is noted that in the side elevational view of the present embodiment according to figures 1-8 the position of the locking pin 17 of the rear lever 11 and of the guide pin 26 of the rear lever coincide.

The illustrated embodiment of the roof systems operates in the following manner.

In figure 1 the panel 4 is in its fully closed position. The locking pin 19 of the front lever 7 is positioned in a substantially vertically extending part of the stationary front locking curve 20 (thus the front locking mechanism 9 is in its locking position for preventing a longitudinal movement of the front lever and panel until reaching the position of figure 5, as will be discussed below), whereas the locking pin 17 of the rear lever 11 in a similar manner is positioned in a substantially vertically extending part of the stationary rear locking curve 18 (thus the rear locking mechanism 16 likewise is in its locking position preventing a longitudinal movement of the rear lever).

In figure 2 the operating part (more precise, front operating part and rear operating part) 21,22 has started to move to the rear (to the right), such that a cooperation between the guide channel 24 of the rear operating part 22 and a (the) respective guide pin(s) 26 of the rear lever 11 pivots the rear lever 11 upwards with its end (rear pivot 12) that engages the panel 4. The front part of the rear lever with the locking pin 17 still is positioned in the stationary rear locking curve 18, thus preventing a rearward movement of the rear lever 11. As a result the rear end of the panel 4 is lifted to a first height.

This movement continues until the panel 4 has reached a first tilted position with a first height illustrated in figure 3. During the transition of the roof system from the position in figure 1 to the position in figure 3 the rear pivot 12 of the rear lever 11 remains in the forward guide curve section 14.

By moving the operating part 21,22 further to the rear the cooperation between the guide channel 24 and the guide pin(s) 26 of the rear lever 11 moves the rear lever in such a manner that the locking pin 17 leaves the stationary rear locking curve 18 (and the rear locking mechanism 16 reaches a release position), and the rear lever moves to the rear as well, such that its rear pivot 12 moves from the forward guide curve section 14 to the rearward guide curve section 15 (while the panel 4 still remains locked against a longitudinal movement by the front locking mechanism), thus lifting the rear end of the panel 4 to a second, more elevated tilted position with an increased second height, as illustrated in figure 4.

Figure 5 shows a position in which, due to a further movement of the operating part 21,22 (and resulting cooperation between its guide channel 23 and the guide pin(s) 25 of the front lever 7), the front locking mechanism 9 has reached a position in which the locking pin 19 of the front lever 7 is about to leave the stationary front locking curve 20. Also in this position, a frontal edge of the panel 4 has started to be lifted.

Still further moving the operating part 21,22 to the rear leads to a release position of the front locking mechanism 9 in figure 6 in which the locking pin 19 has left the front locking curve 20 and the entire assembly of front and rear levers 7,11 and panel 4 starts to move to the rear (figure 7) until reaching the fully opened position (figure 8) in which the panel 4 for its greater part is positioned above the rear part 2 of the fixed roof.

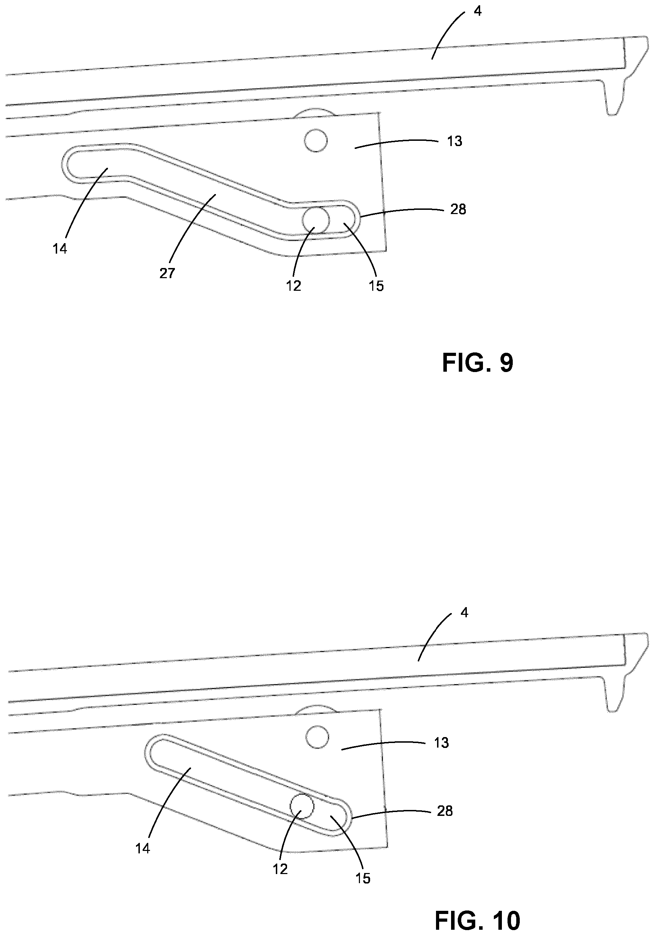

Figure 9 schematically and on a larger scale shows the guide curve as used in the embodiment according to figures 1-8, wherein the forward (or first) and rearward (or second) guide curve sections 14,15 both extend in a linear manner over some distance and are connected by an intermediate guide curve section 27 extending in an inclined manner. In an alternative embodiment (figure 10) the guide curve in the bracket 13 substantially extends in a linear and inclined manner from the forward guide curve section 14 towards the rearward guide curve section 15.

Referring to figures 9 and 10, it is conceivable that the guide curve in the bracket 13 is embodied such that the rear pivot 12 is remote from a rearward boundary 28 of the rearward guide curve section 15 in a situation in which the front locking mechanism 9 has unlocked the front lever 7 and panel 4, the rear locking mechanism 16 has unlocked the rear lever 11 and the operating part 21,22 longitudinally moves the front lever, panel and rear lever.

The invention is not limited to the embodiments described which may be varied widely within the scope of the invention as defined by the appending claims.

## Claims

1. Roof system for a vehicle having a roof opening in a fixed roof of the vehicle, at least comprising a panel which is movable relative to the fixed roof between a closed position, a tilted position in which a rear end of the panel is lifted and a fully opened position, and a rear lever for lifting a rear end of the panel, **characterized in that** the panel at its rear end is provided with a bracket comprising a guide curve in which the rear lever movably engages, such that the rear lever is movable between a position engaging a first guide curve section in which the panel assumes a first tilted position in which its rear end is lifted to a first height, and a position engaging a second guide curve section in which the panel assumes a second tilted position in which its rear end is lifted to an increased second height.

2. Roof system according to claim 1, comprising:
(a) two guide rails extending in a longitudinal direction of said vehicle at opposite lateral sides of the roof opening;
(b) the panel which is movable relative to fixed roof between a closed position in which the roof opening is closed, a tilted position in which a rear end of the panel is lifted and a fully opened position in which also the forward end of the panel is lifted and the panel is shifted to the rear over the fixed roof;
(c1) a front mechanism cooperating with the guide rails, comprising a front lever pivotably engaging a forward part of the panel with a front pivot having a fixed position relative to the panel, and configured for lifting the forward part of the panel and shifting the panel in a rearward longitudinal direction;
(c2) a front locking mechanism cooperating with the guide rails and the front lever and configured for, in a locking position, preventing a movement of the front lever and panel in said rearward longitudinal direction and for, in a release position, allowing said movement of the front lever and panel in said rearward longitudinal direction;
(d1) a rear mechanism cooperating with the guide rails, comprising the rear lever pivotably engaging a rearward part of the panel with a rear pivot and configured for moving the panel to the tilted position;
(d2) a rear locking mechanism cooperating with the guide rails and the rear lever configured for, in a locking position, preventing a movement of the rear lever in said rearward longitudinal direction and for, in a release position, allowing said movement of the rear lever in said rearward longitudinal direction;
(e) at least one operating part which is movable in one of the guide rails and which is responsible for in a specific timed manner causing the operation of the front lever, front locking mechanism, rear lever and rear locking mechanism such that the panel, starting from its closed position, first moves to the tilted position, next to a position with also its forward end lifted and finally to its fully opened position;
wherein the panel at its rear end is provided with the bracket comprising a guide curve in which the rear pivot is movable relative to the panel, which guide curve comprises a forward guide curve section at a first distance from the panel and a rearward guide curve section at a larger second distance from the panel,
wherein the operating part by moving in the longitudinal direction causes the movement of the panel to its tilted position in such a manner that successively:
- in the closed position of the panel the rear pivot is located in the forward guide curve section;
- starting from the closed position, the rear lever remains locked against a longitudinal movement, and is lifted while the rear pivot remains in the forward guide curve section, whereas the panel remains locked against a longitudinal movement, such that the panel assumes a first tilted position in which its rear end is lifted to a first height;
- starting from the first tilted position, the rear locking mechanism unlocks the rear lever and the rear lever is moved longitudinally such that the rear pivot moves towards the rearward guide curve section, while the panel still remains locked against a longitudinal movement, such that the panel assumes a second tilted position in which its rear end is lifted to an increased second height.

3. Roof system according to claim 1 or 2,
wherein the guide curve in the bracket substantially extends in a linear and inclined manner from the forward guide curve section towards the rearward guide curve section.

4. Roof system according to claim 1 or 2,
wherein the forward and rearward guide curve sections both extend in a linear manner over some distance and are connected by an intermediate guide curve section extending in an inclined manner.

5. Roof system according to any of the claims 2-4, wherein the rear locking mechanism comprises a locking pin attached to the rear lever and a stationary rear locking curve cooperating therewith.

6. Roof system according to any of the previous claims, wherein the guide curve in the bracket is embodied such that the rear pivot is remote from a rearward boundary of the rearward guide curve section in a situation in which the front locking mechanism has unlocked the front lever and the panel, the rear locking mechanism has unlocked the rear lever and the operating part longitudinally moves the front lever, panel and rear lever.

7. Roof system according to any of the claims 2-6, wherein the operating part is provided with at least one guide channel and wherein the front lever and rear lever are provided with guide pins cooperating with the at least one guide channel.

8. Roof system according to claim 7, wherein the operating part comprises a front operating part cooperating with the front lever and a rear operating part cooperating with the rear lever, wherein the front operating part and rear operating part are coupled for synchronizing the longitudinal movements thereof.

9. Roof system according to claim 8, wherein the coupling between the front operating part and rear operating part comprises a mechanical connection therebetween.

10. Roof system according to any of the claims 2-9, wherein the front locking mechanism comprises a locking pin attached to the front lever and a stationary front locking curve cooperating therewith.

11. Vehicle provided with a roof system according to any of the previous claims.
